# EUROPEAN PATENT APPLICATION

(11) **EP 1 548 620 A1**
(43) Date of publication of application: **29.06.2005**
(21) Application number: 02758888.8
(22) Date of filing: 13.09.2002
(51) Int. Cl.: G06F 17/60

(54) **NOZZLE INFORMATION RETRIEVAL SYSTEM AND SERVER CONSTITUTING THIS SYSTEM**

(71) Applicant: Asakawa, Hiroyoshi, Nishinomiya-shi, Hyogo 662-0894 (JP)
(72) Inventor: Asakawa, Hiroyoshi, Nishinomiya-shi, Hyogo 662-0894 (JP)
(74) Representative: Sajda, Wolf E., Dipl.-Phys.
(86) International application number: PCT/JP2002/009406
(87) International publication number: WO 2004/025529

(57) **Abstract**

A nozzle information retrieval system comprising a server unit having a database 20 for retrieving nozzle information and a client unit accessible to the server unit through a communication network, in which the nozzle specification information is registered with the corresponding nozzle model number information in the database 20, and the nozzle information is input from the display screen of the client unit and transmitted to the server unit, so that the server unit searches the database 20 for and extracts the nozzle model number information corresponding to the input nozzle specification information, the extracted nozzle model number information is sent back to the client unit and the retrieved nozzle model number information is displayed on the display screen of the client unit.

## Description

### TECHNICAL FIELD

The present invention relates to a nozzle information retrieval system for retrieving the nozzle information utilizing a communication network and a server unit constituting this system.

### BACKGROUND ART

A user desirous of acquiring a nozzle for ejecting a high-pressure water or the like fluid manually searches for the nozzle information meeting his/her desired specification from catalogs of several nozzle makers.

It takes about two to four hours to find out the desired nozzle from the catalogs of even several makers. Unless the nozzle desired by the user is found, the catalog of another nozzle maker is checked. There are at least 30 nozzle makers in the world, and a considerable labor is required to search the catalogs of all these makers.

This invention has been developed in view of this situation, and the object thereof is to provide a nozzle information retrieval system and a server unit constituting the system permitting the user to find the desired nozzle within a short length of time.

### DISCLOSURE OF THE INVENTION

In order to solve the problem mentioned above, according to this invention, there is provided a nozzle information retrieval system comprising a server unit having a database for retrieving nozzle information and a client unit accessible to the server unit through a communication network,
characterized in a configuration in which the nozzle specification information are registered with the corresponding nozzle model number information in the database, the nozzle specification information is input from the display screen of the client unit and transmitted to the server unit, the server unit extracts the nozzle model number information corresponding to the input nozzle specification information by searching the database. The nozzle model number information thus extracted is sent back to the client unit, and the retrieved nozzle model number information is displayed on the display screen of the client unit.

The operation and effects of the nozzle information retrieval system having this configuration are as follows:
(1) The user accesses the server unit using the client unit (computer such as a personal computer).
(2) A predetermined screen is displayed on the display screen of the client unit. The nozzle specification information is input from this screen.
(3) The nozzle specification information thus input is transmitted from the client unit to the server unit.
(4) The server unit extracts by searching the database for the nozzle model number information corresponding to the nozzle specification information transmitted thereto.
(5) The retrieved nozzle model number information is sent back to the client unit.
(6) The nozzle model number information is displayed on the display screen of the client unit.

As described above, the database is searched based on the nozzle specification information, and the search result is displayed on the display screen. In the case where a plurality of nozzle model number information meet the nozzle specification information, the particular plurality of the nozzle model number information are displayed on the display screen. In this way, the user can be immediately informed of the nozzle model number information meeting the desired specification. As a result, a nozzle information retrieval system permitting the user to find the desired nozzle within a short time can be provided.

In order to solve the above-mentioned problem, according to this invention, there is provided a server unit constituting a nozzle information retrieval system,
characterized by comprising:
a database for registering the nozzle specification information with the corresponding nozzle model number information;
a database retrieval unit for retrieving the nozzle model number information registered in the database based on the nozzle specification information transmitted from a client unit; and
a model number data processor for transmitting the retrieved nozzle model number information to the client unit.

The operation and effects of the server unit having this configuration are as follows:

Upon receipt of the nozzle specification information transmitted from the client unit, the server unit searches the database and extracts the nozzle model number information corresponding to the nozzle specification information. The nozzle model number information thus retrieved is sent back to the client unit. The nozzle model number information is displayed on the display screen of the client unit.

As described above, the nozzle model number information meeting the specification desired by the user can be provided immediately. As a result, the nozzle desired by the user can be found out within a short time.

A preferred embodiment of this invention is so configured that the database retrieval unit retrieves that catalog image data of the nozzle model number information transmitted to the client unit which corresponds to the nozzle model number information selected by the client unit, and the catalog image data thus retrieved is displayed on the client unit.

In the case where the nozzle model number information is displayed on the display screen of the client unit, the user may desire to confirm the appearance and the detailed specification of the actual nozzle or to acquire the catalog. Thus, in the case where the catalog image data corresponding to the particular nozzle model number information can be retrieved using the database, the catalog can be viewed conveniently on the screen without taking the trouble of acquiring it. The user can print the catalog image on display using his/her printer whenever necessary.

According to another preferred embodiment of the invention, a simulation program is stored to visually display, on the display screen of the client unit, the spray characteristic of the nozzle corresponding to the nozzle model number information.

Many users selecting a nozzle desire to actually confirm the spray characteristic of the particular nozzle. For this purpose, the user has so far been required to take the trouble of visiting the nozzle maker. The provision of a simulation program in the server unit to visually confirm the nozzle spray characteristic on the screen makes it possible to readily confirm the nozzle spray characteristic on the screen without taking the trouble of visiting the nozzle maker. By the way, the program may be executed by the server unit and the execution result transmitted to the client, or the program may be downloaded to the client unit and executed by the browser of the client unit.

Still another preferred embodiment of the invention is so configured that according to the simulation program, a virtual laboratory is displayed on the display screen of the client unit, and the nozzle is mounted on a measuring instrument or a tester selected on the screen thereby to display the test result visually.

The simulation program is configured to display the virtual laboratory, and therefore the user can go through a realistic experience without taking the trouble of visiting the nozzle maker. The measuring instruments and the testers for nozzle performance evaluation are displayed on the screen, and any measuring instrument and any tester can be selected on the screen. The measuring instrument or the tester selected is mounted on the nozzle and the test result can be displayed. By conducting this virtual test, materials for determining whether the nozzle is to be purchased or not are made available.

Yet another preferred embodiment of the invention is so configured that the simulation program makes it possible to produce the sound of spraying the fluid from the nozzle.

In nozzle performance evaluation, the sound generated when the fluid is sprayed from the nozzle may be used as an evaluation item. By creating a program to spray the fluid from the nozzle and output the spray sound on the screen, the user is provided with the materials for determination to select the nozzle.

A further preferred embodiment of the invention is such that in the case where the nozzle model number information meeting the nozzle specification information cannot be retrieved, a message asking the user whether an order is placed or not for a special type of nozzle is displayed on the display screen of the client unit.

This configuration enables the nozzle makers to readily acquire the need of a special type of nozzle having a high added value. The nozzle makers can thus be informed of the commodity need through a communication network without deploying many salesmen. In other words, the information on special types of nozzles can be acquired quickly and easily by constructing the nozzle information retrieval system according to the invention.

A still further preferred embodiment of the invention is so configured that a nozzle layout design program is stored in a manner ready to be downloaded, and based on the simulation result obtained from the simulation program by the client unit, the nozzle layout design drawing can be automatically prepared using the nozzle layout design program.

From the simulation result described above, the optimum nozzle pressure and the inter-nozzle distance desired by the user can be obtained. The client unit, on the other than, can download the nozzle layout design program from the server unit. The client unit, based on the simulation result, can automatically prepare the nozzle layout design drawing. Therefore, a system very useful for the user can be provided.

According to a yet further preferred embodiment of the invention, the nozzle layout design program is so configured that the drawing data of the nozzle layout design drawing is fetched into the CAD installed in the client unit.

In the case where the nozzle layout design drawing that can be obtained is used for the CAD, it is bothersome for the user to input the drawing data again. To overcome this inconvenience, the nozzle layout design drawing is prepared in a form that can be fetched into the CAD. By doing so, the drawing can be easily fetched, and a system very useful for the user is provided.

Another preferred embodiment of the invention is so configured that a nozzle purchase specification file is stored in a manner ready to be downloaded, and the nozzle layout design drawing can be attached to the nozzle purchase specification on the display screen of the client unit.

In the case where the nozzle of the desired specification can be obtained by the virtual experiment according to the simulation program described above and it is desired to purchase a nozzle, the nozzle purchase specification file is downloaded from the server unit. The required data is input in this nozzle purchase specification file. Thus, the nozzle purchase specification can be prepared. Also, the nozzle layout design drawing can be attached to (inserted into) the specification. A purchase order can be issued by, for example, uploading the nozzle purchase specification attached to the nozzle layout design drawing to the server unit. As a result, the transaction can be smoothly conducted between the nozzle supplier and the user.

### BRIEF DESCRIPTION OF THE DRAWINGS

- Fig. 1: is a diagram showing a nozzle information retrieval system according to a preferred embodiment.
- Fig. 2: is a diagram showing a control block configuration of a server unit.
- Fig. 3: is a flowchart for explaining the steps of nozzle information retrieval.
- Fig. 4: is a diagram for explaining a simulation screen of a nozzle spray characteristic.
- Fig. 5: is a diagram showing the control block configuration of the server unit (Second embodiment).
- Fig. 6: is a diagram showing a control block configuration of a client unit (Second embodiment).
- Fig. 7: is a flowchart for explaining the steps of nozzle information retrieval (Second embodiment).
- Fig. 8: is a diagram showing an example of producing a nozzle layout design drawing.
- Fig. 9: is a diagram showing an example of producing a nozzle specification format.

### BEST MODE FOR CARRYING OUT THE INVENTION

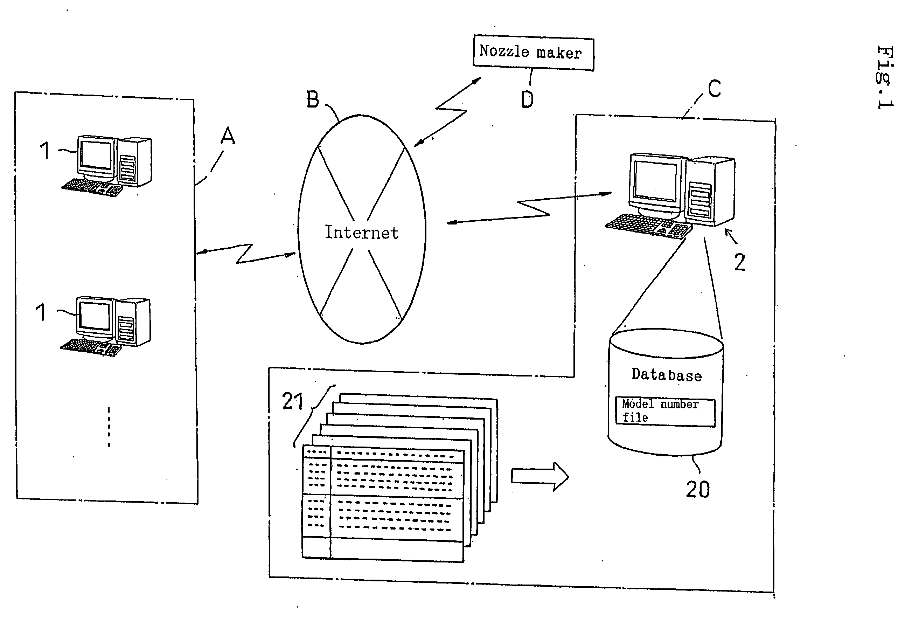

Fig. 1 is a diagram showing a nozzle information retrieval system according to a preferred embodiment (first embodiment) of the invention.

In this system, a server unit 2 managed by an overall nozzle consultant C (hereinafter referred to as the consultant) providing nozzle information constructed in a database and a client unit 1 of the user A are connected to each other through a communication network B. A personal computer is generally used as the client unit 1, in which a browser is installed to browse the home pages through the internet. The server unit 2 is what is called the Web server, which searches the database and provides the user with the required information. The application software required for this purpose is installed in the server unit 2. The communication network B, which is the internet, may alternatively be a closed network such as an intranet to configure this system.

A nozzle maker D is also connected to exchange the required information with the consultant C. By the way, the consultant C also carries on other businesses than the nozzle information retrieval service using the database 20, though not described in detail.

The server unit 2 has a database 20. The catalog data of all the nozzle makers in the world are registered in the database 20. Specifically, the nozzle specification information are registered with the corresponding nozzle model number information. The model number information on the nozzles manufactured by each nozzle maker are registered with the corresponding specification information including the pressure, flow rate, spray angle, spray pattern, material, etc. In the case where the user desires a nozzle having a certain spray angle, for example, the database 20 can be searched based on the numerical value of the spray angle as a key word. Also, the catalog image data 21 of each maker are input in the database 20. In the case where the model number of a given maker is designated, the corresponding page of the catalog carrying the nozzle of the particular model number can be retrieved. As a result, the user can arbitrarily acquire the catalog information of the nozzle makers all over the world by use of the database 20.

### Configuration of server unit

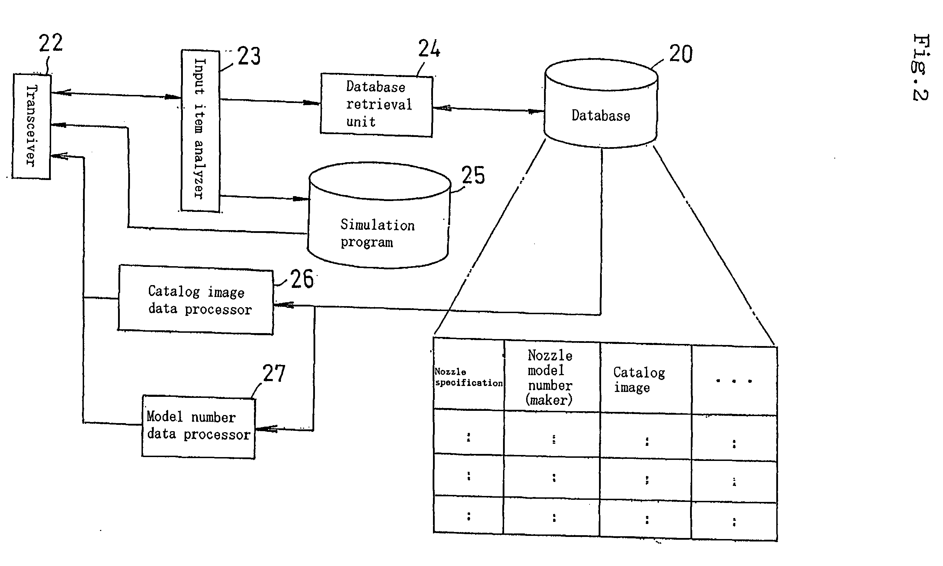

Next, a control block configuration of the server unit 2 is explained with reference to Fig. 2. A transceiver 22 receives the data from the client unit 1 on user side and transmits the data on the result of search to the user. Also, in response to the access from the user, the data for displaying the Web page (HTML data) are transmitted.

An input item analyzer 23 analyzes the nozzle specification information transmitted from the client unit 1. The database retrieval unit 24 searches the database 20 with the input item analyzed by the input item analyzer 23 as a key word, and extracts the nozzle model number information corresponding to the key word.

A model number data processor 27 generates the HTML data and transmits it to the client unit 1 through the transceiver 22 in order to display the extracted nozzle model number information on the display screen of the client unit 1 as a list. A catalog image data processor 26 generates the HTML data and transmits it in order to display the catalog image data retrieved from the database 20 on the display screen of the client unit 1 in a predetermined form.

Also, a simulation program 25 is stored in the server unit 1. The user desiring to purchase a nozzle is often desirous of actually confirming the spray characteristic of the particular nozzle. It is bothersome, however, to visit the nozzle maker for the sole purpose of confirmation, and therefore it is desirable that the spray characteristic can be confirmed by a simple method. As long as the server unit has the simulation program 25 for visually confirming the nozzle spray characteristic on the screen, the nozzle spray characteristic can be readily confirmed on the screen without taking the trouble of visiting the nozzle maker.

### Nozzle information retrieval process

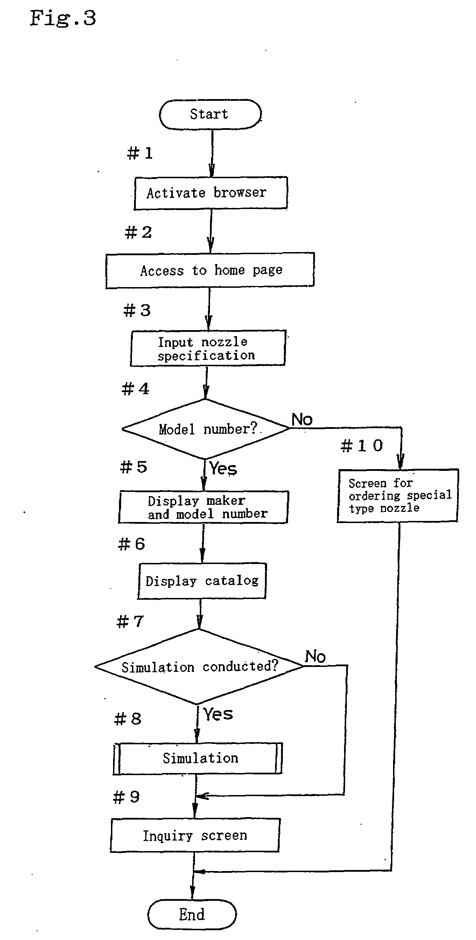

Next, the steps executed by the user to retrieve the nozzle information are briefly explained with reference to the flowchart of Fig. 3.

The user first activates the browser of the client unit 1 to access the home page of the consultant C (#1). The URL for accessing the home page is input and the home page is browsed (#2). The process is transferred to a predetermined input screen (not shown) from the home page. On this screen, the desired nozzle specification information is input. For this purpose, several input items are selected and numerical values are also input as required. A specific example of the input items is described above.

Once the required input items are input, the transmission button is clicked by mouse to transmit the data to the server unit 2. The server unit 2, upon receipt of the nozzle specification information from the user, analyzes the items thereof. With the analyzed items as a key word, the database 20 is searched. Upon extraction of the corresponding nozzle model number information as the result of search (#4), a list of nozzle model number information is transmitted to the client unit 1 and displayed with the maker name on the display screen (#5).

In the case where the nozzle model number information cannot be extracted as the result of search, on the other hand, it indicates that the nozzle desired by the user is not available as a standard product, and therefore the screen is displayed indicating whether a special type of nozzle is desired or not (#10).

In the presence of a plurality of nozzle model information at step #5, on the other hand, the nozzle model number information are displayed in a list. The user desirous of knowing further details (appearance, price, performance, etc.) of the nozzle model number information on display clicks the nozzle model number information on the screen. Then, the catalog carrying the particular nozzle can be viewed (#6). Specifically, by clicking the nozzle model number information on the screen, a catalog request signal is transmitted to the server unit 2, which in turn extracts the corresponding catalog image data by searching the database 20, and returns the extracted catalog image data to the client unit 1. As a result, the user can confirm the contents of the catalog on the screen.

A message indicating whether the performance including the spray characteristic of the nozzle selected by the user is simulated or not is also displayed on the screen. In the case where the simulation is conducted, the process is transferred to the simulation screen described later and the spray characteristic, etc. are simulated. In the case where no simulation is carried out, on the other hand, the process proceeds to step #9.

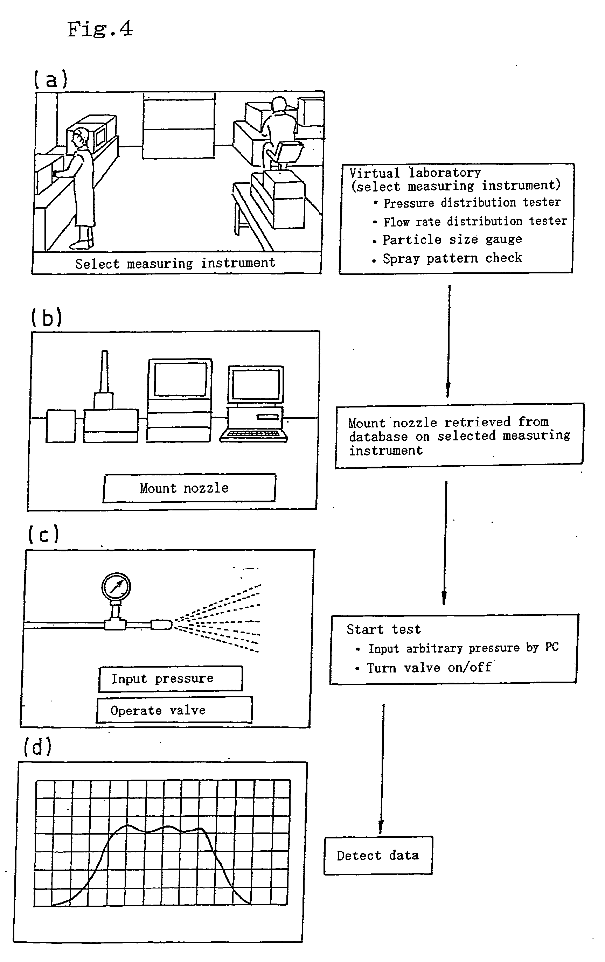

Next, the simulation is explained with reference to Fig. 4. The feature of this simulation lies in that the nozzle spray characteristic can be known in a virtual laboratory in the same manner as if a game is enjoyed. Fig. 4(a) shows the state of the virtual laboratory first displayed on the screen. This laboratory is equipped with a pressure distribution tester, a flow rate distribution tester and a particle size gauge, and the user can select a tester and a measuring instrument to check on this screen.

Once a tester or a measuring instrument is selected appropriately, the screen is transferred to the one shown in (b). On this screen, a nozzle selected by the user can be mounted on the tester or the measuring instrument, as the case may be. As a result, the user can experience the nozzle test in the same manner as if it is conducted in an actual laboratory. After mounting the nozzle, the spray conditions (pump pressure, spray distance, nozzle pitch, etc.) are input. The computer calculates the input spray conditions according to a set formula, and sends the calculation data to the CG (computer graphics) software. Then, a three-dimensional image (still or dynamic image) can be displayed on the screen.

Next, the value of fluid pressure for the test is input, and the valve is turned on/off. As a result, the fluid can be ejected from the nozzle on the screen as shown in (c). As described above, the user can visually confirm the spray characteristic of the nozzle selected by himself/herself on the display screen. The user can set again the spray conditions while viewing the screen. Not only the image, but the sound of nozzle spray can be output. As a result, a more realistic simulation is made possible.

Further, the result of the test conducted using the tester or the measuring instrument can be displayed as data in a graph as shown in (d) (this diagram shows the spray characteristic). In place of the graph, the measurement values at a single point may be output. The spray characteristic can be determined by theoretical calculation. By incorporating the theoretical calculation formula in the program, therefore, the data can be output.

As described above, the user can conduct the simulation in the same manner as if enjoying a game. In the case where the simulation of another type of nozzle is desired, the process is returned, for example, to the screen of Fig. 4(b), where the particular another type of nozzle is mounted on the tester or the measuring instrument.

Upon completing the simulation, the process proceeds to step #9. At step #9, an inquiry screen is displayed. In the case where an inquiry is made, an inquiry signal is transmitted to the server unit 2. In the presence of a plurality of nozzle model information on display, the user selectively makes an inquiry about a plurality of nozzles among them. The consultant C who has received the inquiry requests each nozzle maker to send an estimate, and notifies the estimate data received from each nozzle maker to the user. This inquiry and the estimate data are also transmitted through a communication network.

### Second Embodiment

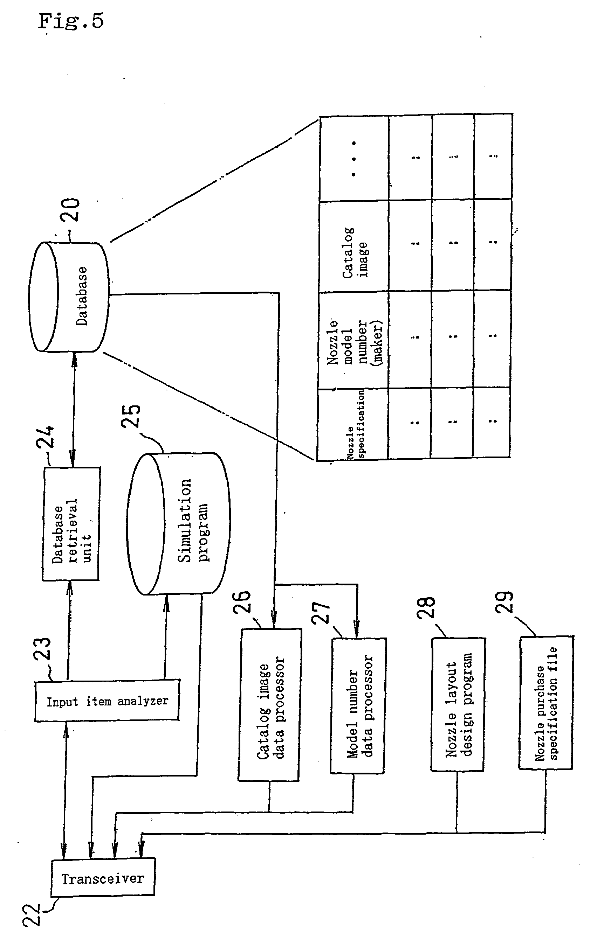

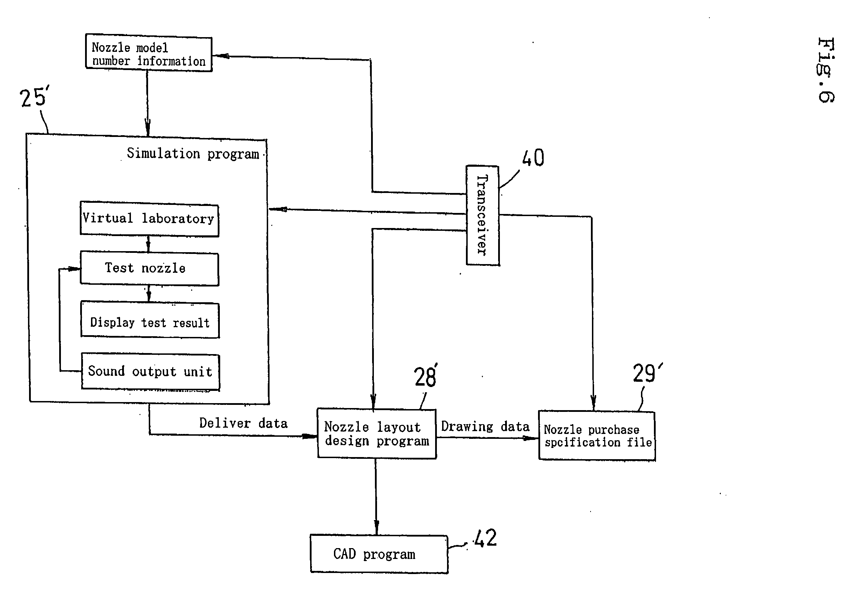

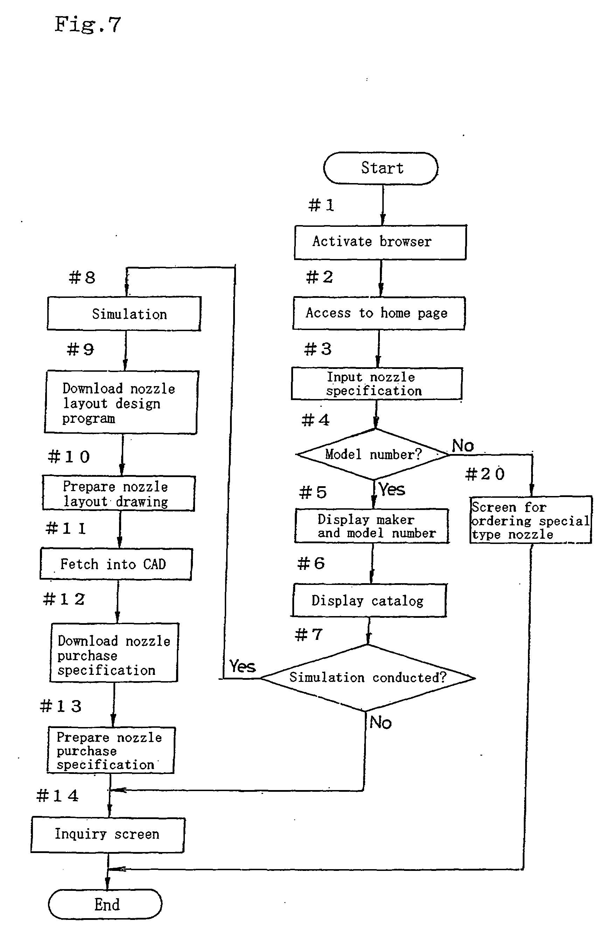

A nozzle information retrieval system according to a preferred embodiment (second embodiment) of the invention is explained. Fig. 5 is a diagram showing a block configuration of the server unit, Fig. 6 a diagram showing a block configuration of the client unit, and Fig. 7 a flowchart showing the nozzle information retrieval process.

Only the parts of the configuration shown in Fig. 5 which are different from Fig. 2 are explained. A nozzle layout design program 28 is stored in a recording medium such as a hard disk of the server unit. The client unit can download this nozzle layout design program 28. Also, a nozzle purchase specification file 29 is stored in a recording medium such as a hard disk of the server unit. The client unit can download this nozzle purchase specification file 29.

As shown in Fig. 6, the client unit includes a transceiver 40. The transceiver 40 can be implemented by a well-known transceiver program. A simulation program 25' is stored by being downloaded from the server unit as described above. The functions of the simulation program 25' including the virtual laboratory function, the nozzle test function, the test result display function and the audio output function can be the same as those explained above with reference to the first embodiment (Figs. 1 to 4).

The nozzle layout design program 28', as described above, is stored by being downloaded from the server unit. The data obtained by the simulation program and the various data input to conduct the simulation are delivered to the nozzle layout design program 28'. The nozzle layout design program 28' is executed to prepare the nozzle layout design drawing automatically based on the delivered data.

The CAD (computer-aided design) program 42 is stored in the client unit. This CAD program 42 can be executed directly using the drawing data of the nozzle layout design drawing prepared by the nozzle layout design program 28'.

The nozzle purchase specification file 29' is stored by being downloaded from the server unit. This file can be used to prepare the nozzle purchase specification in the case where a desired nozzle is determined by the simulation program 25' and the user desires to purchase the particular nozzle. Also, the drawing data prepared by the nozzle layout design program 28' can be used and attached to the specification.

Also in the client unit, each program and file are stored in a recording medium such as a hard disk.

Next, the processing steps in the system according to the second embodiment are explained with reference to the flowchart of Fig. 7. In this flowchart, steps #1 to #8 are the same as those already explained and not explained again.

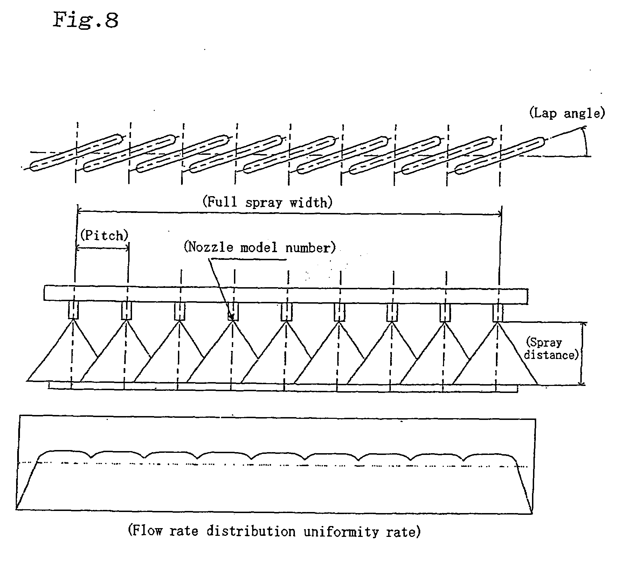

Upon completing the simulation, the user can download the nozzle layout design program 28 (#9). The nozzle layout design drawing can be automatically prepared by delivering the data (pressure, inter-nozzle distance, spray height, etc.) input in the virtual laboratory by simulation to the nozzle layout design program 28' (#10). An example of the nozzle layout design drawing thus prepared is shown in Fig. 8. Fig. 8 shows an example of the layout design drawing and the flow rate distribution with nine nozzles of the model number selected by the user. As a result, a highly useful system is provided whereby the user is not required to take the trouble of actually preparing a nozzle layout design drawing.

Also, the user can fetch the drawing data of the nozzle layout design drawing obtained as shown in Fig. 8 into the CAD program 42 (#11). As a result, the user is not required to take the trouble of inputting the design values, and therefore, also from this viewpoint, a highly useful system is provided for the user. Further, the design work on the part of the user can be improved in efficiency.

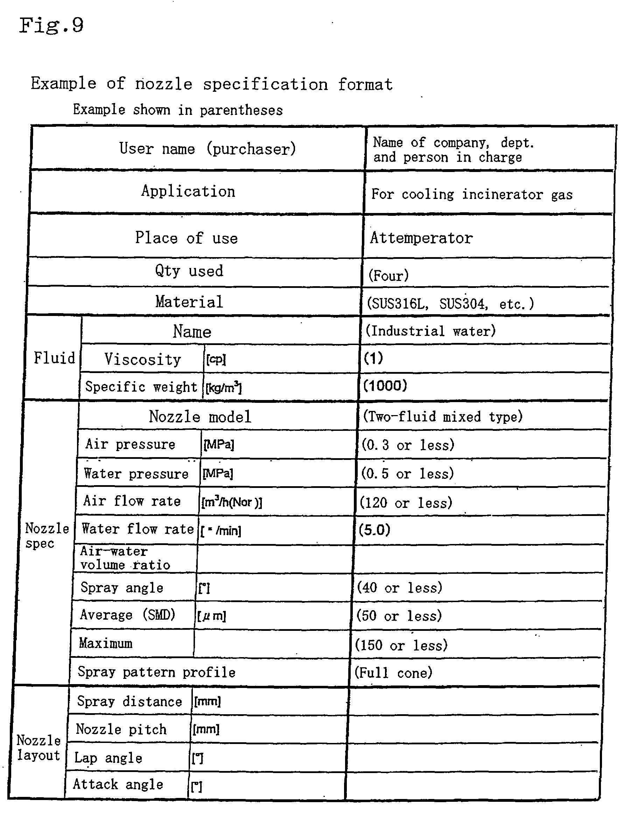

Next, the user can download the nozzle purchase specification file 29 (#12). An example of the nozzle purchase specification thus prepared is shown in Fig. 9. The items input by the user are shown in the parentheses, and all the items required to prepare the estimate on the nozzle are described. Also, in place of inputting the item "nozzle layout" in the specification, the drawing data of the nozzle layout design drawing prepared by the nozzle layout design program 28' can be attached (inserted into the file). The provision of this specification by the server unit makes a very convenient means for the user not accustomed to the nozzle purchase procedure. Further, the specification thus unified for all the nozzle makers provides a very convenient means also for the consultant providing this system.

The user desirous of purchasing a nozzle prepares the specification by inputting the required items in the nozzle purchase specification file (#13). Next, at step #14, the user displays the inquiry screen, and based on the nozzle purchase specification prepared earlier, submits an inquiry to the consultant C. In this case, the nozzle purchase specification file prepared is uploaded to the server unit (by being attached to the electronic mail or otherwise). As a result, the consultant C can request an estimate from each nozzle maker. By the way, in place of uploading the file, the file may be sent by post or otherwise delivered to the consultant C by being stored in a recording medium such as a floppy disk. By employing the system having the configuration described above, each nozzle maker can conduct transactions smoothly without visiting the user.

### Other embodiments

(1) In configuring the system according to the invention, one or a plurality of server units can be selected appropriately. By distributing the functions using a plurality of server units, the load on each server unit can be reduced. The client unit 1, on the other hand, is not limited to the personal computer but may be an accessible portable terminal. Also, the communication network can be either wireless or wired.
(2) A plurality of simulation programs, instead of a single program, may be employed. A program for outputting the sound, for example, may be an independent program.
(3) The following steps may be inserted to input the nozzle characteristic data directly in the virtual laboratory. Specifically, the nozzle model number information is input, the tester or the like is selected, the spray conditions are input, and then the arithmetic operation is performed by the computer based on the spray conditions thereby to output the measurement data.

## Claims

1. A nozzle information retrieval system comprising a server unit having a database for retrieving nozzle information and a client unit accessible to the server unit through a communication network,
**characterized by** a configuration in which the nozzle specification information is registered with the corresponding nozzle model number information in the database, and the nozzle information is input from the display screen of the client unit and transmitted to the server unit, so that the server unit searches the database for and extracts the nozzle model number information corresponding to the input nozzle specification information, the extracted nozzle model number information is sent back to the client unit and the retrieved nozzle model number information is displayed on the display screen of the client unit.

2. A server unit making up the nozzle information retrieval system according to claim 1, **characterized by** comprising:
a database in which the nozzle specification information is registered with the corresponding nozzle model number information;
a database retrieval unit for retrieving the nozzle model number information registered in the database based on the nozzle specification information transmitted from the client unit; and
a model number data processor for transmitting the retrieved nozzle model number information to the client unit.

3. A server unit according to claim 2,
**characterized by** a configuration in which catalog image data contained in the nozzle model number information transmitted to the client unit which corresponds to the nozzle model number information selected by the client unit is retrieved by the database retrieval unit, and the retrieved catalog image data is displayed on the client unit.

4. A server unit according to claim 2 or 3,
**characterized in that** a simulation program is stored to visually display the spray characteristic of the nozzle corresponding to the nozzle model number information on the display screen of the client unit.

5. A server unit according to claim 4,
**characterized by** a configuration in which the simulation program causes a virtual laboratory to be displayed on the display screen of the client unit, the nozzle is mounted on a measuring instrument or a tester selected on the screen, and the test result is visually displayed.

6. A server unit according to claim 4 or 5,
**characterized by** a configuration in which the sound of fluid spray from the nozzle can be output according to the simulation program.

7. A server unit according to any one of claims 1 to 6,
**characterized in that** in the case where the nozzle model number information corresponding to the nozzle specification information cannot be retrieved, a message indicating whether or not to place an order for a special type of nozzle is displayed on the display screen of the client unit.

8. A server unit according to any one of claims 4 to 7,
**characterized by** a configuration in which a nozzle layout design program is stored in a manner ready to be downloaded, and based on the simulation result obtained according to the simulation program in the client unit, the nozzle layout design drawing can be automatically prepared using the nozzle layout design program.

9. A server unit according to claim 8,
**characterized in that** the nozzle layout design program is so configured that drawing data of the nozzle layout design drawing can be fetched into the CAD installed in the client unit.

10. A server unit according to claim 8 or 9,
**characterized by** a configuration in which a nozzle purchase specification file is stored in a manner ready to be downloaded, and the nozzle layout design drawing can be attached to the nozzle purchase specification on the display screen of the client unit.
